# EUROPEAN PATENT APPLICATION

(11) **EP 4 711 959 A1**
(43) Date of publication of application: **18.03.2026**
(21) Application number: 25154276.7
(22) Date of filing: 27.01.2025
(51) Int. Cl.: G06F 21/44, H04L 9/40, H04L 67/00, G06F 8/60, G06F 21/57

(54) **SYSTEM AND METHOD OF AUTHENTICATION FOR DEPLOYMENT OF MICROSERVICE(S)**

(30) Priority: 13.09.2024 IN 202441069573
(71) Applicant: Wipro Limited, 560 035 Karnataka (IN)
(72) Inventor: Kanala, Kishore, Karnataka (IN); Kumar, Thirumal, Karnataka (IN)
(74) Representative: Finnegan Europe LLP

(57) **Abstract**

A method for authentication before deployment of microservices is disclosed. For a first microservice of one or more microservices provided by a vendor, the method includes receiving a microservice package corresponding to the first microservice from a server. The microservice package may include metadata of the first microservice. The metadata may include an encrypted Vendor ID (VID) corresponding to the first microservice, and an authentication identity. Upon receiving the microservice package, the method further includes decrypting the encrypted VID using a VID encryption key to obtain the VID; authenticating the first microservice by comparing the VID with each of a predefined list of VIDs; based on a successful authentication, validating the authentication identity based on an authentication technique; and managing deployment of the first microservice of the one or more microservices in a product.

## Description

### Technical Field

This disclosure relates generally to microservices architecture, and more particularly to a system and a method of authentication before deployment of microservices.

### Background

Various industries (such as automotive, healthcare, entertainment, finance, e-commerce, network domain, and the like) today are migrating from a monolithic software architecture to a microservice software architecture for easing maintenance and upgradation. In the microservice software architecture (or microservice architecture), each software feature may be broken down into microservices with specialized functions. Hence, there may be a large number of microservices (depending on product, the number may be in a range of up to over a few thousands) in a product. The product may be a vehicle, an industrial equipment, a consumer electronics product, a healthcare product, or other devices that may include a computing system or a stand-alone computing system on cloud. To ensure that malicious microservices do not get deployed in a microservice architecture-based product, each of the microservices need to be authenticated. Since a large number of microservices may be required by the product, there is a need to optimize the authentication of the microservices to ensure efficient and faster deployment and initialization to ensure limited wait-time/downtime, optimize usage of computing resources, and minimize network traffic.

In the present state of art, techniques for authenticating microservices exist. However, the existing techniques fail to address the issue of overhead during authentication of large number of the microservices, causing delayed deployment. increased down-time, and high computing resource consumption when the microservices may be needed by a user or other software components. Further, such techniques fail to address a possibility of compromising the meta-data used for authentication of microservices. Additionally, the existing techniques fail to provide a secure method for generating metadata of microservices that may be used for authentication. The existing techniques may authenticate containers that include microservices, but may fail to provide for authentication of microservices present within the containers. Further, existing techniques fail to authenticate microservices before deployment in the product.

There is, therefore, a need in the present state of art for techniques that can optimize the process of authentication of microservices.

### SUMMARY

In one embodiment, a method for authentication before deployment of microservices is disclosed. In one example, for a first microservice of one or more microservices provided by a vendor, the method may include receiving a microservice package corresponding to the first microservice from a server. It should be noted that the microservice package may include metadata of the first microservice. It should also be noted that the metadata may include an encrypted Vendor ID (VID) corresponding to the first microservice and an authentication identity. Upon receiving the microservice package, the method may further include decrypting the encrypted VID using a VID encryption key to obtain the VID. It should be noted that the VID encryption key is pre-stored in the computing device and the server. The method may further include authenticating the first microservice by comparing the VID with each of a predefined list of VIDs. Based on a successful authentication, the method may further include validating the authentication identity based on an authentication technique. It should be noted that for each of subsequent microservices from the one or more microservices, the authentication identity validation is, one of, skipped or executed based on a predefined configuration. The method may further include managing deployment of the first microservice of the one or more microservices in a product.

In another embodiment, a system for authentication before deployment of microservices is disclosed. In one example, the system may include a processor and a computer-readable medium communicatively coupled to the processor. For a first microservice of one or more microservices provided by a vendor, the computer-readable medium may store processor-executable instructions, which, on execution, may cause the processor to receive a microservice package corresponding to the first microservice from a server. It should be noted that the microservice package may include metadata of the first microservice. It should also be noted that the metadata may include an encrypted VID corresponding to the first microservice and an authentication identity. Upon receiving the microservice package, the processor-executable instructions, on execution, may further cause the processor to decrypt the encrypted VID using a VID encryption key to obtain the VID. It should be noted that the VID encryption key is pre-stored in the computing device and the server. The processor-executable instructions, on execution, may further cause the processor to authenticate the first microservice by comparing the VID with each of a predefined list of VIDs. Based on a successful authentication, the processor-executable instructions, on execution, may further cause the processor to validate the authentication identity based on an authentication technique. It should be noted that, for each of subsequent microservices from the one or more microservices, the authentication identity validation is, one of, skipped or executed based on a predefined configuration. The processor-executable instructions, on execution, may further cause the processor to manage deployment of the first microservice of the one or more microservices in a product.

In yet another embodiment, a non-transitory computer-readable medium storing computer-executable instructions for authentication before deployment of microservices is disclosed. In one example, for a first microservice of one or more microservices provided by a vendor, the stored instructions, when executed by a processor, may cause the processor to perform operations including receiving a microservice package corresponding to the first microservice from a server. It should be noted that the microservice package may include metadata of the first microservice. It should also be noted that the metadata may include an encrypted VID corresponding to the first microservice and an authentication identity. Upon receiving the microservice package, the operations may further include decrypting the encrypted VID using a VID encryption key to obtain the VID. It should be noted that the VID encryption key is pre-stored in the computing device and the server. The operations may further include authenticating the first microservice by comparing the VID with each of a predefined list of VIDs. Based on a successful authentication, the operations may further include validating the authentication identity based on an authentication technique. It should be noted that, for each of subsequent microservices from the one or more microservices, the authentication identity validation is, one of, skipped or executed based on a predefined configuration. The operations may further include managing deployment of the first microservice of the one or more microservices in a product.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram of an exemplary system for authentication before deployment of microservices, in accordance with some embodiments of the present disclosure.
**FIG. 2** illustrates a functional block diagram of a system for authentication before deployment of microservices, in accordance with some embodiments of the present disclosure.
**FIG. 3** illustrates a flow diagram of an exemplary process for authentication before deployment of a first microservice, in accordance with some embodiments of the present disclosure.
**FIG. 4** illustrates a detailed communication flow for generating Vendor IDs (VIDs) and storing in secure storage, in accordance with some embodiments of the present disclosure.
**FIG. 5A** is an exemplary table representing microservice IDs mapped with Vendor Codes (VCodes), in accordance with some embodiments of the present disclosure.
**FIG. 5B** is an exemplary table representing VCodes mapped with predefined lists of VIDs, in accordance with some embodiments of the present disclosure.
**FIG. 6** illustrates a detailed exemplary communication flow for registering VIDs, in accordance with some embodiments of the present disclosure.
**FIG. 7** illustrates a detailed exemplary communication flow for downloading microservices, in accordance with some embodiments of the present disclosure.
**FIG. 8** illustrates a detailed exemplary communication flow for authentication before deployment of microservices, in accordance with some embodiments of the present disclosure.
**FIG. 9** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

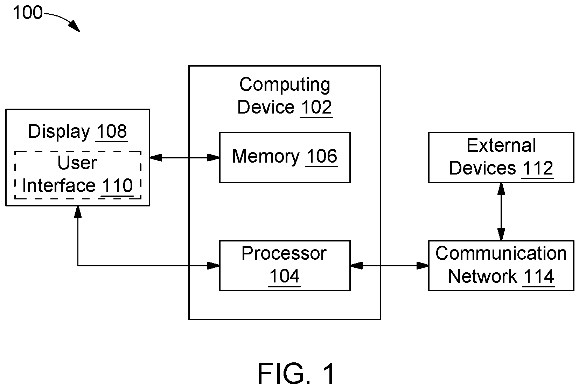

Referring now to FIG. 1, an exemplary system 100 for authentication before deployment of microservices is illustrated, in accordance with some embodiments of the present disclosure. The system 100 may include a computing device 102. The computing device 102 may be, for example, but may not be limited to, a vehicle, a consumer electronics device, a healthcare device, a cloud system, an industrial device, a server, a desktop, a laptop, a notebook, a netbook, a tablet, a smartphone, a mobile phone, or any other computing device where microservices are used, in accordance with some embodiments of the present disclosure. The computing device 102 may be based on a microservice software architecture. The computing device 102 may authenticate microservices before deploying (i.e., running) the microservices in the computing device 102.

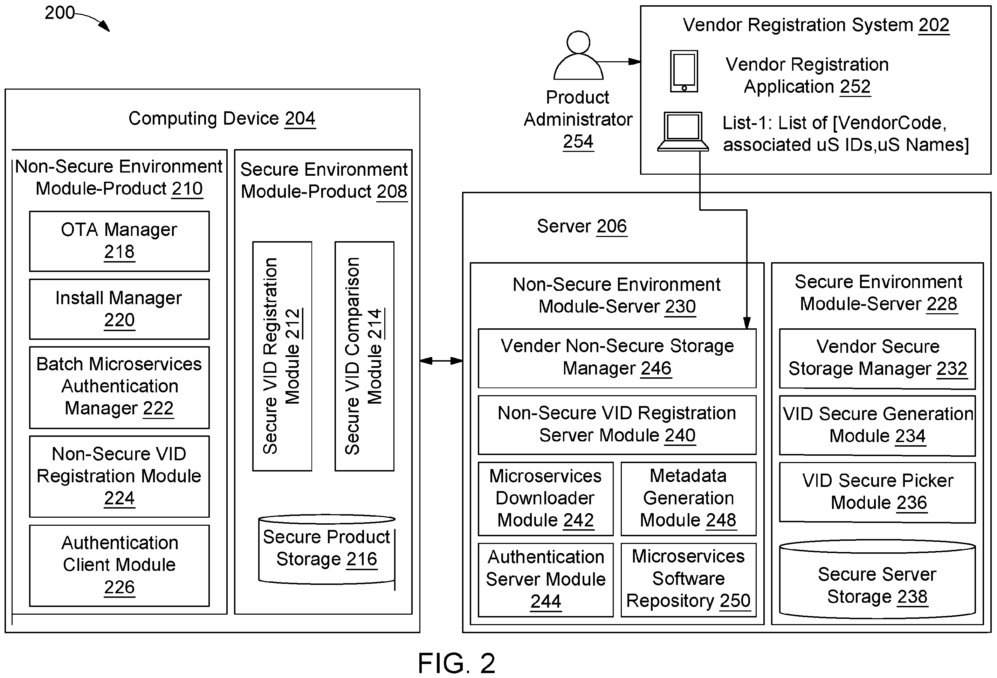

As will be described in greater detail in conjunction with FIGS. 2-8, in order to perform authentication before deployment of microservices, the computing device 102 may, for a first microservice of one or more microservices provided by a vendor, receive a microservice package corresponding to the first microservice from a server. It should be noted that the microservice package may include metadata of the first microservice. It should also be noted that the metadata may include an encrypted Vendor ID (VID) corresponding to the first microservice and an authentication identity. Upon receiving the microservice package, the computing device 102 may further decrypt the encrypted VID using a VID encryption key to obtain the VID. It should be noted that the VID encryption key is pre-stored in the computing device 102 and the server. The computing device 102 may further authenticate the first microservice by comparing the VID with each of a predefined list of VIDs. Based on a successful authentication, the computing device 102 may further validate the authentication identity based on an authentication technique. It should be noted that, for each of subsequent microservices from the one or more microservices, the authentication identity validation is, one of, skipped or executed based on a predefined configuration. The computing device 102 may further manage deployment of the first microservice of the one or more microservices in a product.

In some embodiments, the computing device 102 may include one or more processors 104 and a memory 106. Further, the memory 106 may store instructions that, when executed by the one or more processors 104, may cause the one or more processors 104 to perform authentication before deployment of microservices, in accordance with aspects of the present disclosure. The memory 106 may also store various data (for example, VCodes, predefined lists of VIDs, microservice IDs (uS-IDs), registration keys, VID encryption keys, and the like) that may be captured, processed, and/or required by the system 100. The memory 106 may be a non-volatile memory (e.g., flash memory, Read Only Memory (ROM), Programmable ROM (PROM), Erasable PROM (EPROM), Electrically EPROM (EEPROM) memory, etc.) or a volatile memory (e.g., Dynamic Random Access Memory (DRAM), Static Random-Access memory (SRAM), etc.).

The system 100 may further include a display 108. The system 100 may interact with a user interface 110 accessible via the display 108. The system 100 may also include one or more external devices 112. In some embodiments, the computing device 102 may interact with the one or more external devices 112 over a communication network 114 for sending or receiving various data. The communication network 114 may include, for example, but may not be limited to, a wireless fidelity (Wi-Fi) network, a light fidelity (Li-Fi) network, a local area network (LAN), a wide area network (WAN), a metropolitan area network (MAN), a satellite network, the internet, a fiber optic network, a coaxial cable network, an infrared (IR) network, a radio frequency (RF) network, and a combination thereof. The one or more external devices 112 may include, but may not be limited to, a remote server, a laptop, a netbook, a notebook, a smartphone, a mobile phone, a tablet, or any other computing device. In an embodiment, the one or more external devices 112 may include a microservice hosting server and a vendor registration system. This is explained in greater detail in conjunction with FIG. 2.

Referring now to FIG. 2, a functional block diagram of a system 200 for authentication before deployment of microservices is illustrated, in accordance with some embodiments of the present disclosure. FIG. 2 is explained in conjunction with FIG. 1. The system 200 may be analogous to the system 100. The system 200 may include a vendor registration system 202, a computing device 204 (as analogous to the computing device 102), and a microservice hosting server 206 (referred to as a server 206 from hereon). The computing system 204 may be a product (i.e., an end user computing device) where microservices are to be deployed. By way of an example, the product may be, but may not be limited to, a vehicle, a consumer electronic device, a healthcare device, a cloud system, an industrial device, or any other system where microservices are used. The server 206 may be a server where the microservice packages are hosted. The vendor registration system 202 may be an administrator computing device. Each of the vendor registration system 202, the computing device 204, and the server 206 may include one or more processors and a memory (not shown in figure).

The memory (such as the memory 106) of computing device 204 may include a product secure environment module 208 (referred to as a secure environment module 208 from hereon) and a product non-secure environment module 210 (referred to as a non-secure environment module 210 from hereon). The secure environment module 208 may ensure secure operation of critical operations. The secure environment module 208 may be used for processing, storing confidential data, and executing confidential functions. The secure environment module 208 may include a secure VID registration module 212, a secure VID comparison module 214, and a secure product storage 216.

The non-secure environment module 210 may be configured to execute a non-secure critical task. The non-secure environment module 210 may include only that modules which may not be impacted by security hacks. The non-secure environment module 210 may include an Over-the-Air (OTA) manager 218, an install manager 220, a Batch Microservice Authentication Manager (BuSAM) 222, a non-secure VID registration module 224, and an authentication client module 226.

A memory of the server 206 may include a server secure environment module 228 (referred to as a secure environment module 228 from hereon) and a server non-secure environment module 230 (referred to as a non-secure environment module 230 from hereon). The secure environment module 228 may be used for processing, storing confidential data, and executing confidential functions. The secure environment module 228 may further include a vendor secure storage manager 232, a VID secure generation module 234, a VID secure picker module 236, and a secure server storage 238.

The non-secure environment module 230 may be analogous to the non-secure environment module 210 of the computing device 204. The non-secure environment module 230 may further include a non-secure VID registration server module 240, a microservice downloader module 242, an authentication server module 244, a vendor non-secure storage manager 246, a metadata generation module 248, and a microservice software repository 250.

The vendor registration system 202 may run a vendor registration application 252. The vendor registration system 202 may be, for example, but may not be limited to, a laptop, a netbook, a notebook, a smartphone, a mobile phone, a tablet, or any other computing device. The vendor registration application 252 may receive a Vendor Code (VCode) and associated one or more microservice IDs (uS-IDs) from a product administrator 254. The product administrator 254 may correspond to one or more individuals managing authentication and deployment of microservices on the computing device 204. The VCode may be vendor information corresponding to a vendor that provides one or more microservices to be deployed in the computing device 204. Also, the one or more uS-IDs may be unique IDs corresponding to the one or more microservices provided by the vendor. The VCode and the one or more uS-IDs may be assigned by the product administrator 254 to the vendor and the one or more microservices, respectively. As will be appreciated, thousands of microservices may be deployed in the computing device 204. The thousands of microservices may be provided by a plurality of vendors. Thus, the product administrator 254 may provide a plurality of VCodes corresponding to the plurality of vendors. In other words, each vendor may be assigned a single unique VCode.

Upon receiving the VCode and the associated one or more uS-IDs, the vendor registration application 252 may generate a first list. The first list may include the VCode and the associated one or more the uS-IDs. In an embodiment, the first list may include a mapping of the VCode and the associated one or more the uS-IDs. Further, the vendor registration application 252 may send the first list to the vendor non-secure storage manager 246 of the server 206 interfacing with the vendor registration application 252 over a secure communication channel. Further, the vendor non-secure storage manager 246 may send the first list to the vendor secure storage manager 232.

Further, the vendor secure storage manager 232 may generate Vendor IDs (VIDs) corresponding to the VCode from the first list. It should be noted that that the vendor secure storage manager 232 may generate the VIDs based on the VCode and a count of the one or more microservices provided by the vendor. Further, the vendor secure storage manager 232 may create a second list including the VCode and the VIDs. By way of an example, the first list may include a VCode 'ABC' corresponding to a vendor that provides 3 microservices with uS-IDs `uS-1', 'uS-2', and `uS-3' and a VCode `XYZ' corresponding to a vendor that provides 2 microservices with uS-IDs `uS-4' and `uS-5'. Based on the count of the microservices provided by the two vendors, the vendor secure storage manager 232 may generate 3 VIDs for the VCode `ABC' and 2 VIDs for the VCode `XYZ'.

Further, the vendor secure storage manager 232 may send the first list and the second list to the secure server storage 238. The secure server storage 238 may store the first list and the second list in form of two tables in a secure storage. Further, the vendor secure storage manager 232 may send a notification to the vendor registration application 252 running on the vendor registration system 202 about generation of the second list (i.e., the VCode and the VIDs) and sharing of the first list and the second list.

Further, the vendor registration application 252 may send a request to the non-secure VID registration server module 240 to initiate process of registration of the one or more VIDs. The registration of the one or more VIDs may correspond to securely storing the one or more VIDs in the secure product storage 216. The non-secure VID registration server module 240 may register the second list (i.e., list of VIDs) with the computing device 204. It should be noted that the second list may include a list of VIDs corresponding to vendors which are authorized to develop and host the one or more microservices. Thus, the second list may correspond to a list of allowed VIDs.

The non-secure VID registration server module 240 may send a request to the VID secure generation module 234 for the second list. The VID secure generation module 234 may send a request to the secure server storage 238 to obtain the second list. Upon obtaining the second list, the VID secure generation module 234 may encrypt each VID in the second list to obtain an encrypted allowed VID list using a registration key. The registration key may be pre-stored in the computing device 204 and the server 206 (in separate key stores) by the product administrator 254. Further, the VID secure generation module 234 may send the encrypted allowed VID list to the non-secure VID registration server module 240.

Further, the non-secure VID registration server module 240 may send the encrypted allowed VID list to the non-secure VID registration module 224 of the computing device 204 over a secure communication channel. Further, the non-secure VID registration module 224 may send the encrypted allowed VID list to the secure VID registration module 212. The secure VID registration module 212 may decrypt each encrypted VID of the encrypted allowed VID list using the pre-stored registration key to retrieve each VID of the second list. Further, the secure VID registration module 212 may store the second list in the secure product storage 216. Upon storing the second list, the secure VID registration module 212 may notify the non-secure VID registration module 224. Further, the non-secure VID registration module 224 may notify the non-secure VID registration server module 240 about completion of the registration of the VIDs in the second list. Further, the non-secure VID registration module 224 may notify the vendor registration application 252 about completion of the registration process.

It should be noted that the microservices for deployment in the computing device 204 may be developed by the product manufacturer (internal or in-house development) or through allowed vendors (third-party development). The microservices software repository 250 may store microservice packages of the microservices in a file system. Additionally, the microservices software repository 250 may store details of the microservices, such as, but not limited to, uS-ID, name of the microservice, path of the microservice package, etc. The microservices and the associated details may be provided by the product administrator 254. In addition, the product administrator 254 may notify the details of the microservices to the OTA manager 218.

When the computing device 204 may require a microservice, the OTA manager 218 may send a download request to the microservices downloader module 242. The download request may include uS-ID of the required microservice. Further, the microservices downloader module 242 may initiate preparation of a microservice package of the microservice through the metadata generation module 248. The metadata generation module 248 may prepare the metadata of the microservice.

The metadata may include an encrypted VID of the microservice. The metadata generation module 248 may send a request to the VID secure picker module 236 for a VID associated with the microservice. The request may include the uS-ID. Further, the VID secure picker module 236 may send the uS-ID to the secure server storage 238 to obtain a VCode corresponding to the uS-ID from the first list. The VID secure picker module 236 may then send the VCode to the secure server storage 238 to obtain a list of VIDs corresponding to the VCode from the second list. It should be noted that the list of VIDs may be an entry in the second list.

Further, the VID secure picker module 236 may randomly select one VID from the list of VIDs. The VID secure picker module 236 may ensure that the randomly selected VID is unique and not previously used by storing each previously randomly selected VID in a picked VID list and comparing the randomly selected VID with the picked VID list. If the randomly selected VID is present in the picked VID list, the generation of the second list is repeated to obtain a new second list. Further, the VID secure picker module 236 may encrypt the randomly selected VID using a VID encryption key to obtain the encrypted VID. The VID encryption key may be pre-stored in the server 206 and the computing device 204 in separate key stores. Further, the VID secure picker module 236 may send the encrypted VID to the metadata generation module 248.

Additionally, the metadata may include an authentication identity (for example, an authentication token, a certificate, a digital signature, etc.). Upon receiving the encrypted VID, the metadata generation module 248 may send a request to the authentication server module 244 for the authentication identity. In response to the request, the authentication server module 244 may send the authentication identity to the metadata generation module 248.

Additionally, the metadata may include the VCode. The metadata generation module 248 may send the metadata (i.e., the encrypted VID, the authentication identity, and the VCode) to the microservices downloader module 242. Further, the microservices downloader module 242 may send the uS-ID of the microservice to the microservices software repository 250. Further, the microservices software repository 250 may send the microservice package to the microservices downloader module 242. Further, the microservices downloader module 242 may send the microservice package and the associated metadata to the OTA manager 218. The OTA manager 218 may store the microservice package in a local path on the computing device 204. Further, the OTA manager 218 may provide the local path and the metadata to the install manager 220.

Prior to being installed and deployed by the install manager 220, the microservice needs to be successfully authenticated by the BuSAM 222. The BuSAM 222 may receive VCodes either from the second list (when VIDs are registered and stored in the computing device 204) or from the first list (obtained from the vendor non-secure storage manager 246). Further, the BuSAM 222 may create a VCode-uS count table with mapping between VCode and microservice count. The BuSAM 222 may fill the VCode-uS count table with VCodes for the plurality of vendors and may initialize the microservice count for each VCode to zero.

Further, the BuSAM 222 may receive the metadata from the install manager 220. The BuSAM 222 may retrieve the authentication identity and the encrypted VID from the metadata.

For a first microservice from the vendor (i.e., when the microservice count for the VCode is 0), the BuSAM 222 may send the encrypted VID to the secure VID comparison module 214. The secure VID comparison module 214 may decrypt the encrypted VID to obtain the VID associated with the first microservice. Further, the secure VID comparison module 214 may retrieve registered VIDs (i.e., VIDs of the second list) stored in the secure product storage 216. The secure VID comparison module 214 may then compare the VID with each of the registered VIDs.

If a match for the VID is not found in the registered VIDs, the secure VID comparison module 214 may return an authentication failure to the BuSAM 222. Further, the BuSAM 222 may notify the authentication failure to the install manager 220. The install manager 220 may then log the event of failure. Additionally, the install manager 220 may not deploy the first microservice in the computing device 204.

If the match for the VID is found in the registered VIDs, the secure VID comparison module 214 may return an authentication success to the BuSAM 222. The BuSAM 222 may increment the microservice count for corresponding VCode in the VCode-uS count table using the VCode received in the metadata.

Further, the BuSAM 222 may send a validation request for the authentication identity of the first microservice to the authentication client module 226. The authentication client module 226 may send the authentication identity to the authentication server module 244 of the server 206. The authentication server module 244 may authenticate the authentication identity through known authentication techniques, such as OAuth. Further, the authentication server module 244 may send result of authentication (i.e., 'authentication failure' or 'authentication successful') to the BuSAM 222.

If the authentication of the authentication identity is successful, the BuSAM 222 triggers the install manager 220 to deploy the first microservice in the computing device 204. On the other hand, if the authentication of the authentication identity is unsuccessful, the BuSAM 222 triggers the install manager 220 to block the deployment of the first microservice. The install manager 220 may log successful or unsuccessful deployment of the first microservice.

In some embodiments, for subsequent microservices from the same vendor for which the first microservice was authenticated (i.e., when the microservice count for the VCode is non-zero), authentication of the authentication identity may be avoided. Since the vendor is authenticated during the first microservice authentication, only VID-based authentication may be performed, skipping authentication identity validation. This saves processing bandwidth, avoids delays in microservice deployment, and minimizes network traffic. In a preferred embodiment, at least one microservice (the first microservice or any other microservice) provided by the vendor is authenticated using both VID-based authentication and authentication identity validation.

In some other embodiments, the product administrator 254 may configure the computing device 204 to perform authentication identity validation at regular intervals (i.e., after authentication of every predefined number of microservices of the vendor). In some embodiments, the authentication identity validation may be based on predefined labels assigned to the microservices. The predefined labels may be indicative of one of microservice category or microservice resource criticality. In some embodiments, predefined labels may be assigned to vendors (i.e., VCodes) and the product administrator may configure the computing device 204 to perform authentication identity validation of microservices provided by one or more groups of vendors based on the assigned labels. Alternatively, all the microservices provided by the vendor may be authenticated using both authentication steps (i.e., the VID-based authentication and the authentication identity validation).

Thus, authentication steps for a microservice may be based on a predefined configuration. The pre-defined configuration may be provided through a configuration file or some other means, by the product administrator 254 to the server 206 and the computing device 204 during registration of VIDs. As described earlier, generation and registration of VIDs may be performed multiple times (when needed). Similarly, the pre-defined configuration (via the configuration file) may also be registered by the product administrator 254 in the computing device 204 repeatedly when needed. The predefined configuration may be stored in a storage space of the computing device 204 (for example the secure product storage 216).

In an embodiment, the metadata of a microservice may include the predefined label assigned to the microservice. The BuSAM 222 may check the predefined label and may determine whether the authentication identity validation may be executed or skipped. The predefined label may be indicative of the microservice category. For example, finance microservices that access critical/confidential data may require both authentication steps. In this case, the metadata may also include a microservice category field. The pre-defined configuration may include mapping between the microservice categories and the respective authentication steps to be performed. The predefined label may be indicative of the microservice resource criticality. For example, microservices that have access to critical resources (computational and data) may require authentication with both the authentication steps. In this case, the metadata may also include a microservice resource criticality field. The pre-defined configuration may include mapping between the microservice resource criticality and the authentication steps to be performed.

Each of the computing device 204 and the server 206 may include a secure environment module (i.e., the secure environment module 208 and the secure environment module 228) and a non-secure environment module (i.e., the non-secure environment module 210 and the non-secure environment module 230). In an alternative embodiment, the secure environment module may not exist. In such a system, all the processing that may be carried out by the sub-modules in the secure environment module may be carried out in the non-secure environment module securely. It should be noted that critical data may be stored in a secure area by the sub-modules in the non-secure environment module. Such a system may reduce the multiple interactions within the same system.

All the microservices may be downloaded and hosted on the product (such as the computing device 204) itself, so that the microservices may be deployed on need basis at a later point of time. The advantage of this system is that interaction to the server 206 over internet is avoided and latency is minimized.

It should be noted that all such aforementioned modules 202 - 250 may be represented as a single module or a combination of different modules. Further, as will be appreciated by those skilled in the art, each of the modules 202 - 250 may reside, in whole or in parts, on one device or multiple devices in communication with each other. In some embodiments, each of the modules 202 - 250 may be implemented as dedicated hardware circuit comprising custom application-specific integrated circuit (ASIC) or gate arrays, off-the-shelf semiconductors such as logic chips, transistors, or other discrete components. Each of the modules 202 - 250 may also be implemented in a programmable hardware device such as a field programmable gate array (FPGA), programmable array logic, programmable logic device, and so forth. Alternatively, each of the modules 202 - 250 may be implemented in software for execution by various types of processors (e.g., processor 104). An identified module of executable code may, for instance, include one or more physical or logical blocks of computer instructions, which may, for instance, be organized as an object, procedure, function, or other construct. Nevertheless, the executables of an identified module or component need not be physically located together, but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for authentication before deployment of microservices. For example, the exemplary system 100 and the associated computing device 102, 204 may authenticate before deployment of microservices, by the processes discussed herein. In particular, as will be appreciated by those of ordinary skill in the art, control logic and/or automated routines for performing the techniques and steps described herein may be implemented by the system 100 and the associated computing device 102, 204 either by hardware, software, or combinations of hardware and software. For example, suitable code may be accessed and executed by the one or more processors on the system 100 to perform some or all of the techniques described herein. Similarly, application specific integrated circuits (ASICs) configured to perform some or all of the processes described herein may be included in the one or more processors on the system 100.

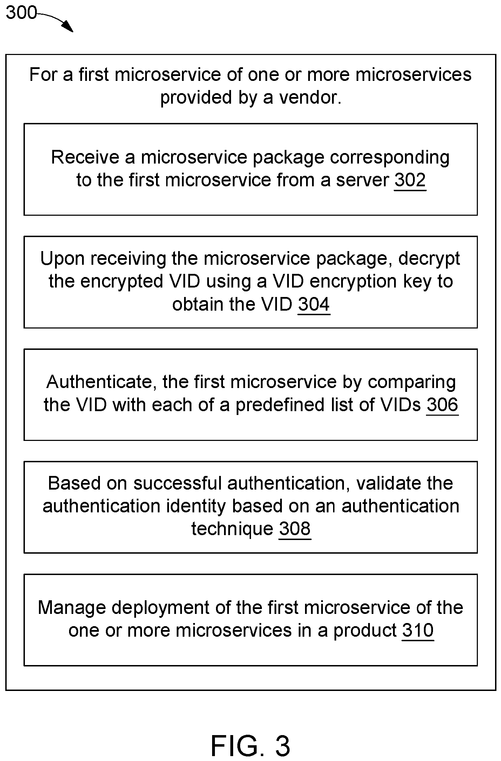

Referring now to FIG. 3, an exemplary process 300 for authentication before deployment of a first microservice is illustrated via a flow chart, in accordance with some embodiments of the present disclosure. The process 300 may be implemented by the computing device 102 of the system 100. In some embodiments, the process 300 may include receiving, by the non-secure VID registration module 224, a list of encrypted VIDs from a server (such as the server 206) over a secure communication channel. The list of encrypted VIDs may include each of a predefined list of VIDs encrypted using a registration key. It may be noted that the predefined list of VIDs may be analogous to the list of VIDs (i.e., a list including VCodes and VIDs associated with each of the VCodes). The registration key is pre-stored in the computing device 204 and the server 206.

Further, upon receiving the list of encrypted VIDs, the process 300 may include decrypting, by the secure VID registration module 212, each of the list of encrypted VIDs using the secure registration key to obtain the predefined list of VIDs. Further, the process 300 may include storing, by the secure VID registration module 212, the list of VIDs in a first secure database. The first secure database may be analogous to the secure product storage 216.

Further, for a first microservice of one or more microservices provided by a vendor, the process 300 may include transmitting, by the OTA manager 218, a download request corresponding to the first microservice to the server (such as the server 206). The download request may include a uS-ID of the first microservice.

Further, the process 300 may include receiving, by the OTA manager 220, a microservice package corresponding to the first microservice from a server, at step 302. The microservice package may include metadata of the first microservice. The metadata may include an encrypted VID corresponding to the first microservice, and an authentication identity (such as an authentication token, a certificate, a digital signature, etc.). It may be noted that the encrypted VID may include a randomly selected VID from the one or more VIDs. The randomly selected VID may be absent in a list of previously selected VIDs prior to encryption. The encrypted VID may be obtained via encryption of the randomly selected VID using a VID encryption key.

Upon receiving the microservice package, the process 300 may include decrypting, by the OTA manager 218, the encrypted VID using the VID encryption key to obtain the VID, at step 304. It should be noted that the VID encryption key may be pre-stored in the computing device (such as the computing device 204) and the server (such as the server 206).

Further, the process 300 may include authenticating, by the BuSAM 222 and via the secure VID comparison module 214, the first microservice by comparing the VID with each of a pre-defined list of VIDs, at step 306. The pre-defined list of VIDs may be analogous to a second list stored in the secure product storage 216. The pre-defined list of VIDs is based on vendor information (such as VCode) and a count of the one or more microservices provided by the vendor. The predefined list of VIDs may include the one or more VIDs corresponding to the vendor information. In an embodiment, the pre-defined list of VIDs may include the VCode and associated one or more VIDs.

Further, based on a successful authentication, the process 300 may include validating, by the BuSAM 222 and via the authentication client module 226, the authentication identity based on an authentication technique, at step 308. The authentication technique may be, for example, 'OAuth' and the like. For each of subsequent microservices from the one or more microservices provided by the vendor, the authentication identity validation is, one, of, skipped or executed based on a predefined configuration.

Further, the process 300 may include managing, by the BuSAM 222, deployment of the first microservice of the one or more microservices in a product (such as the computing device 204), at step 310. The step 310 of the process 300 may include initiating, by the BuSAM 222, the deployment of the first microservice when an identical VID corresponding to the VID is present in the predefined list of VIDs. Alternatively, the step 310 of the process 300 may include blocking, by the BuSAM 222, the deployment of the first microservice when an identical VID corresponding to the VID is absent in the predefined list of VIDs.

In an embodiment, the metadata may further include a predefined label. The predefined label may be indicative of one of a microservice category or a microservice resource criticality. During the time of registration of the VIDs, the process 300 may include receiving, by the secure VID registration module 212, a configuration file from an administrator device (such as the vendor registration system 202). The configuration file may include the predefined configuration. The predefined configuration may include a predefined criteria corresponding to the execution of authentication identity validation based on the predefined label. The predefined configuration may be stored in the secure product storage 216. Further, for each of the subsequent microservices provided by the vendor, the process 300 may include validating, by the BuSAM 222, the authentication identity using the authentication technique based on the predefined configuration and the predefined label. Alternatively, for each of the subsequent microservices, the process 300 may include skipping, by the BuSAM 222, validation of the authentication identity using the authentication technique based on the predefined configuration and the predefined label.

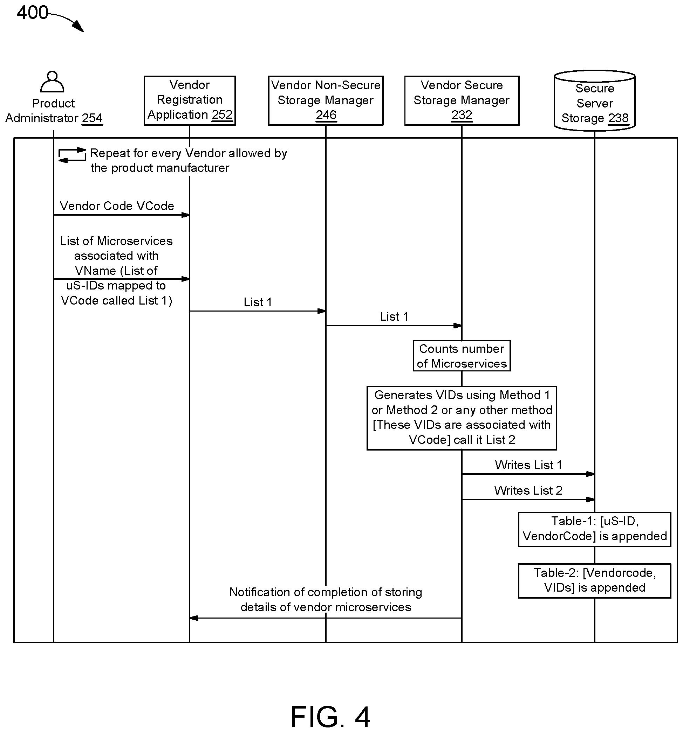

Referring now to FIG. 4, a detailed exemplary communication flow 400 for generating VIDs and storing in secure storage is illustrated, in accordance with some embodiments of the present disclosure. The product administrator 254 may initiate the communication flow 400 during production of product (i.e., the computing device 204) and when there may be an update (e.g., addition or removal) in vendors and microservices after product deployment during the lifetime of the product.

The product administrator 254 may provide the VCode and one or more uS-IDs associated with the VCode using the vendor registration application 252. The vendor registration application 252 may be a desktop, web, or mobile application. The vendor registration application 252 running on a user device (e.g., desktop or mobile) may receive the VCode provided by the product administrator 254. The vendor registration application 252 may further receive the one or more uS-IDs associated with the VCode provided by the product administrator 254.

Further, the vendor registration application 252 may prepare and send the first list including the VCode and the associated one or more us-IDs to the vendor non-secure storage manager 246 over a secure communication channel. Further, the vendor non-secure storage manager 246 may send the first list to the vendor secure storage manager 232.

The vendor secure storage manager 232 may count the number of microservices (count-uSn) associated with the VCode using the one or more uS-IDs provided by the product administrator 254 along with VCode. Further, the vendor secure storage manager 232 may generate one or more VIDs for each vendor by suffixing one or more strings to the VCode.

In an embodiment, the one or more VIDs may be generated by suffixing a series of numbers 1,2,3,... to the VCode. For example, for a VCode `XYZ', the one or more VIDs may be 'XYZ1', 'XYZ2', ..., and 'XYZn'. In another embodiment, the one or more VIDs may be generated by suffixing a unique string to the VCode based on time elapsed since epoch (i.e., timestamp). Alternatively, the one or more VIDs may be generated by any other method, such as a method in which the VCode is suffixed with a string generated based on a combination of any activity on the server 206, such as hash of subset of data over network and the time elapsed since epoch.

It may be noted that a number of the one or more VIDs generated may depend on the count (count-uSn) of the one or more microservices. The number of VIDs generated may be equal to the number of microservices provided by the vendor. Further, the vendor secure storage manager 232 may map the VCode with the generated one or more VIDs to generate the second list. Further, the vendor secure storage manager 232 may send the first list (including VCode and associated uS-IDs) and the second list (including VCode and generated VIDs) to the secure server storage 238. The first list and the second list are stored in the secure server storage 238 in tabular formats as a first table and a second table, respectively.

Further, the vendor secure storage manager 232 may notify the vendor registration application 252 upon completion of generation of the one or more VIDs and storing of details of vendor (i.e., VCode and VIDs) and microservices (i.e., us-IDs).

The communication flow 400 is repeated to generate and store VIDs for each of a plurality of vendors allowed by the product administrator 254. In other words, VIDs may be generated and stored for each of a plurality of VCodes provided by the product administrator 254. The product administrator 254 may input the VCode and the uS-IDs for each of the plurality of vendors individually to the vendor non-secure storage manager 246 through the vendor registration application 252. Alternatively, the product administrator 254 may provide a mapping of the VCode and the uS-IDs for multiple vendors together to the vendor non-secure storage manager 246 through the vendor registration application 252.

Additionally, the communication flow 400 may be repeated multiple times as per the requirements of the product administrator 254. The first list and the second list may be provided by the vendor secure storage manager 232 to either completely modify the entries (i.e., VCodes, uS-IDs, and/or VIDs) in the secure server storage 238 or to add new entries to the secure server storage 238.

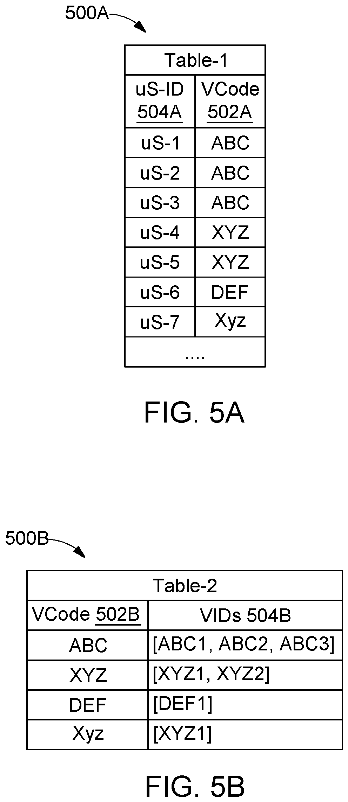

Referring now to FIG. 5A, an exemplary table 500A representing microservice IDs mapped with VCodes is illustrated, in accordance with some embodiments of the present disclosure. The table 500A is analogous to the first table corresponding to the first list. The table 500A may provide values corresponding to VCode 502A mapped with one or more uS-IDs 504A associated with the VCode 502A. The VCode 502A may be unique for each of a plurality of vendors. The uS-ID 504A may be unique for each microservice. Thus, there may be one or more uS-IDs 504A corresponding to the same value of VCode 502A. For each row of the table 500A, one uS-ID 504A is mapped with one VCode 502A.

By way of an example, for the VCode 502A `ABC', the associated uS-IDs 504A may be `uS-1', 'uS-2', and `uS3'. For the VCode 502A `XYZ', the associated uS-IDs 504A may be `uS-4' and 'uS-5'. For the VCode 502A `DEF', the associated uS-ID 504A may be 'uS-6'. For the VCode 502A `xyz', the associated uS-ID 504A may be 'uS-7'.

Referring now to FIG. 5B, an exemplary table 500B representing VCodes mapped with predefined lists of VIDs is illustrated, in accordance with some embodiments of the present disclosure. FIG. 5B is explained in conjunction with FIG. 5A. The table 500B is analogous to the second table corresponding to the second list. The table 500B may provide values corresponding to VCode 502B (same as VCode 502A) mapped with a list of uS-IDs 504B associated with the VCode 502B. For each row of the table 500B, one list of uS-IDs 504B is mapped with one VCode 502B. The number of VIDs in the list of VIDs 504B for each VCode 502B may be equal to the number of uS-IDs 504A corresponding to the VCode 502A.

By way of an example, for the VCode 502B `ABC', the list of VIDs 504B may be '[ABC1, ABC2, ABC3]'. For the VCode 502B `XYZ', the list of VIDs 504B may be `[XYZ1, XYZ2]. For the VCode 502B `DEF', the list of VIDs 504B may be '[DEF1]'. For the VCode 502B `xyz', the list of VIDs 504B may be `[xyz1]'.

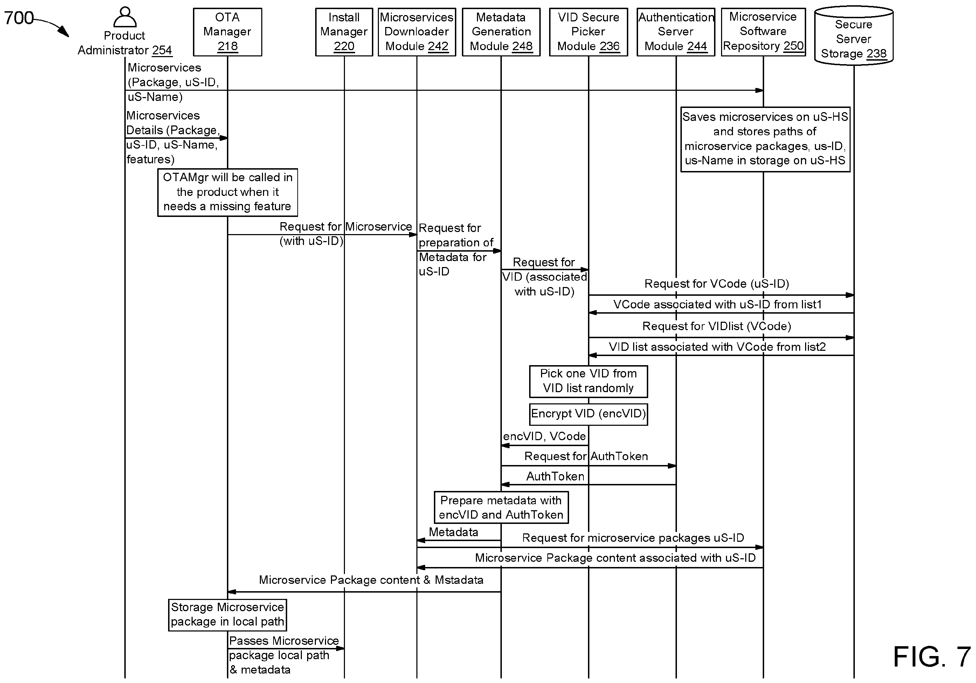

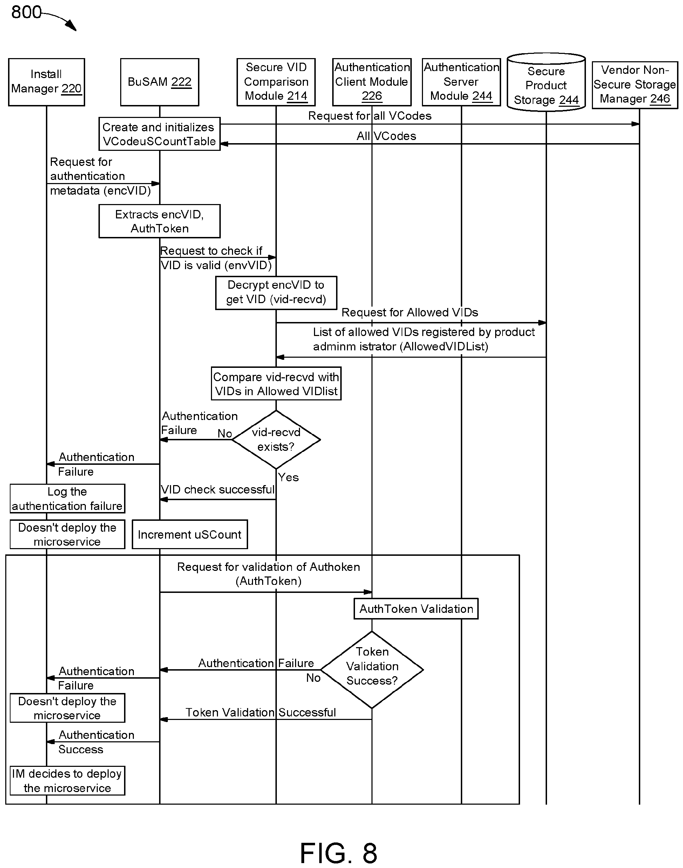

In some embodiments, VIDs may be generated without adding any suffix to the VCode and thus, the VCode may be used in place of the VID. In other words, the VCode may be used directly for all associated microservices. In such embodiments, only the first table (or the first list) may be valid. However, a limitation with using VCodes as VIDs is that if a VID is compromised, malicious microservice can be sent to the computing device 204 with the compromised VID. The VID generation methods that involve suffixed VCodes ensure that the same VID is not used for each microservice, adding protection from malicious microservices even if a VID is compromised. This is because the computing device 204 can detect whether a VID is repeated. This is explained in greater detail in conjunction with FIGS. 7 and 8.

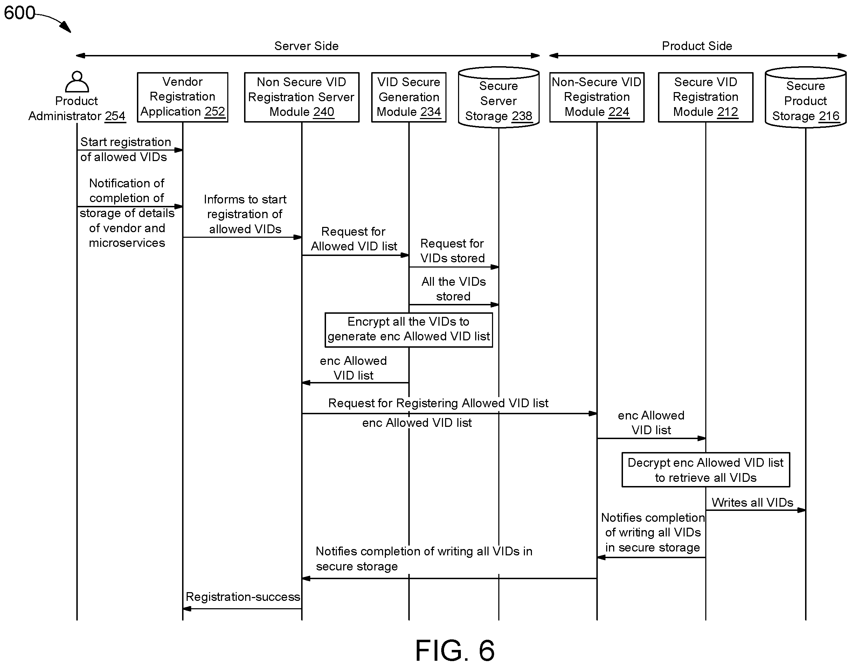

Referring now to FIG. 6, a detailed exemplary communication flow 600 for registering VIDs is illustrated, in accordance with some embodiments of the present disclosure. FIG. 6 is explained in conjunction with FIGS. 4 - 5A-B. The communication flow 600 may be initiated automatically by the vendor registration application 252 upon receiving the notification of completion of generation and storing of vendor and microservice details from the vendor secure storage manager 232. Alternatively, the product administrator 254 may manually initiate the communication flow 600 using the vendor registration application 252 on the user device based on requirements or upon receiving the notification from the vendor secure storage manager 232.

The vendor registration application may request the non-secure VID registration server module 240 to initiate the process of registration of allowed VIDs to the computing device 204 (i.e., the product).

The non-secure VID registration server module 240 may send a request to the VID secure generation module 234 for the second list (i.e., allowed VID list).

Further, the VID secure generation module 234 may send a request to the secure server storage for the second list that is generated and stored previously through the communication flow 400.

Further, the VID secure generation module 234 may receive the second list from the secure server storage 238. Further, the VID secure generation module 234 may encrypt each VID in the second list to generate an encrypted allowed VID list (encAllowedVIDList). For encryption, a registration key (vendorRegisterSecureKey) is used. The registration key may be pre-stored on the server 206 (in a separate key store) by the product administrator 254. Further, the VID secure generation module 234 may send the encrypted allowed VID list to the non-secure VID registration server module 240.

The non-secure VID registration server module 240 may send the encrypted allowed VID list to the non-secure VID registration module 224 of the computing device 204 (the product) over a secure communication channel. Further, The non-secure VID registration module 224 may send the encrypted allowed VID list to the secure VID registration module 212. The contents of the encrypted allowed VID list are not known to the non-secure VID registration module 224.

Further, the secure VID registration module 212 may decrypt each item in encrypted allowed VID list using the registration key to retrieve each VID from the encrypted allowed VID list and obtain the second list (which includes the one or more VIDs). Only the server 206 and the secure VID registration module 212 of the computing device 204 may know the registration key. The registration key may be pre-stored by the product administrator 254 on the computing device 204. The registration key may be written to a secure memory of the computing device 204 (in separate key store) offline or using a separate secure application. The secure VID registration module 212 may write (or store) the second list to the secure product storage 216 accessible only in secure environment. The secure VID registration module 212, after writing the second list to the secure product storage 216, may notify the non-secure VID registration module 224. The non-secure VID registration module 224 may notify the non-secure VID registration server module 240 that registration of the second list (i.e., list of VIDs for allowed vendors) is complete. Further, The non-secure VID registration server module 240 may send the registration-success notification to the vendor registration application 252.

Referring now to FIG. 7, a detailed exemplary communication flow 700 for downloading microservices is illustrated, in accordance with some embodiments of the present disclosure. FIG. 7 is explained in conjunction with FIGS. 4-6.

The product administrator 254 may host a plurality of microservices developed by the product manufacturer (in-house development) and allowed vendors (third party development) in the microservices software repository 250. The product administrator 254 may send microservice packages, corresponding uS-IDs, and corresponding names of the microservices (uS-Name) to the microservices software repository 250. The microservices software repository 250 may store microservice packages in a file system. Additionally, the microservices software repository 250 may store the uS-ID, uS-Name, and path to the microservice package. The microservices software repository 250 may not store the VID or VCode.

As will be appreciated, the computing device 204 should be allowed to download and deploy microservices only from specific authorized vendors collaborating with the product manufacturer for a safe and enhanced user experience. The product administrator 254 may notify microservices details (uS-ID, uS-name, related feature) to the OTA manager 218. The uS-IDs and corresponding functionality/feature descriptions of available microservices may be published to the computing device 204. If there are multiple microservices with same functionality, criteria such as rating, performance, or most downloads may be used.

The OTA manager 218 may be called when the computing device 204 may require a feature (i.e., a feature implemented as microservices) that is missing in the computing device 204. Any known technique in the art can be used to invoke the OTA manager 218. The OTA manager 218 on the computing device 204 may send a download request to the microservices downloader module 242 corresponding to the microservice package of the required microservice. The OTA manager 218 may provide the uS-ID corresponding to the required microservice in the download request.

Further, the microservices downloader module 242 may initiate preparation for downloading the microservice package by invoking the metadata generation module 248 with a request (that includes the uS-ID) to prepare the metadata. Further, the metadata generation module 248 may prepare the metadata. The metadata may include an encrypted VID, an authentication identity, and a VCode corresponding to the mocroservice.

To prepare the encrypted VID, the metadata generation module 248 may request the VID secure picker module 236 for a VID associated with the microservice. For this purpose, the metadata generation module 248 may send a request including the uS-ID to the VID secure picker module 236.

The VID secure picker module 236 may receive the request from the metadata generation module 248 and may send a request to the secure server storage 238 for the VCode by providing the uS-ID. Further, the VID secure picker module 236 may receive the VCode from the secure server storage 238 corresponding to the uS-ID from the first list. Further, the VID secure picker module 236 may send a request to the secure server storage 238 including the VCode for a list of VIDs corresponding to the VCode. The list of VIDs may be available in the secure server storage 238 as part of the second list. In other words, the list of VIDs may be an entry in the second list corresponding to the VCode. The list of VIDs may include the one or more VIDs associated with the VCode. Further, the VID secure picker module 236 may receive the list of VIDs corresponding to the VCode from the secure server storage 238.

From the list of VIDs, and using the corresponding VCode, the VID secure picker module 236 may randomly select one VID. It should be noted that the VID may be different for each microservice from the vendor. Even if the same microservice is requested by the OTA manager 218 for a second time, the selected VID may be different from the VID of the first time. The VID secure picker module 236 may randomly select a VID (picked-VID) from the list of VIDs (or the second list). The VID secure picker module 236 may keep a track of repetition of the VIDs. The VID secure picker module 236 may store the selected VID into a picked VID list.

The VID secure picker module 236 may check whether the selected VID is already part of the picked VID list. If the currently picked-VID exists in the picked VID list, a new list of VIDs corresponding to the VCode may be generated and stored through the process implemented via the communication flow 400. Further, upon successful generation of the new list of VIDs, the VID secure picker module 236 may notify the non-secure VID registration server module 240, and the new list of VIDs may be registered (or stored) in the computing device 204 through the process implemented via the communication flow 400. The VID secure picker module 236 awaits a notification corresponding to a successful registration from the non-secure VID registration server module 224.

The VID secure picker module 236 may encrypt the selected VID using an encryption key to obtain an encrypted VID. The encryption key may be pre-stored by the product administrator 254 on the server 206 and on the computing device 204. The encryption key may be written to a secure memory of the computing device 204 (in a separate key store) offline or using a separate secure application. Further, the VID secure picker module 236 may provide the encrypted VID and the associated VCode to the metadata generation module 248.

To prepare the authentication identity (such as an authentication token, a certificate, or a digital signature), after receiving the encrypted VID, the metadata generation module 248 may send a request to the authentication server module 244 for the authentication identity. Further, the metadata generation module 248 may receive the authentication identity from the authentication server module 244 in response to the request. The metadata generation module 248 may then prepare the metadata with the encrypted VID, the authentication identity, and the VCode. Further, the metadata generation module 248 may provide the metadata to the microservices downloader module 242.

The microservices downloader module 242 may send a request including the us-ID to the microservices software repository 250 for the microservice package. The microservices software repository 250 may receive the request for the microservice package including the uS-ID. Further, the microservices software repository 250 may read the content of the microservice package using the stored path of the microservice package, and may send the content of the microservice package to the microservices downloader module 242. Further, the microservices downloader module 242 may send the content of the microservice package and the associated metadata to the OTA manager 218.

The OTA manager 218 may receive the content of the microservice package from the microservices downloader module 242 and may store the content in a local path in the computing device 204 known to the OTA manager 218 and the install manager 220. The OTA manager 218 may also receive associated metadata from the microservices downloader module 242. The OTA manager 218 may provide the local path of microservice package and the metadata to the install manager 220.

Referring now to FIG. 8, a detailed communication flow 800 for authentication before deployment of microservices is illustrated, in accordance with some embodiments of the present disclosure. FIG. 8 is explained in conjunction with FIGS. 4-7. The BuSAM 222 may prepare a VCode-uS count table with mapping between VCode and microservice count. Whenever VIDs are registered, VCodes may be shared with the computing device 204 (i.e., the product) and stored in the BuSAM 222. Alternatively, the BuSAM 222 may send a request to the vendor non-secure storage manager 246 for all VCodes from the first list and may receive all the VCodes from the vendor non-secure storage manager 246. Further, the BuSAM 222 may create the VCode-uS count table with a mapping between VCode and the microservice count. The BuSAM 222 may fill the VCode-uS count table with VCode and may initialize the microservice count for each VCode to zero.

The install manager 220 may provide the metadata (i.e., the encrypted VID, the authentication identity, and the VCode) to the BuSAM 222. The BuSAM 222 may retrieve the authentication identity and the encrypted VID from the metadata. For the first microservice from the vendor (i.e., when the microservice count for the VCode is 0), the secure VID comparison module 214 may be invoked by the BuSAM 222. The BuSAM 222 may send the encrypted VID to the secure VID comparison module 214.

The secure VID comparison module 214 may check if the vendor that is providing the microservice is authenticated or not. The secure VID comparison module 214 may decrypt the encrypted VID using the encryption key to obtain the VID that can be used for checking validity of the vendor. The encryption key may be pre-stored by the product administrator 254 on the computing device 204. The encryption key may be written to a secure memory of the computing device 204 (in a separate key store) offline or using a separate secure application. The secure VID comparison module 214 may request the secure product storage 244 to obtain all the VIDs (i.e., the second list).

The secure VID comparison module 214 may receive all the VIDs from the secure product storage 244. Further, the secure VID comparison module 214 may compare the decrypted VID against each VID of the one or more VIDs in the second list corresponding to the VCode. If a matching VID is not found in the second list, the secure VID comparison module may return an authentication failure notification to the BuSAM 222. If comparison is successful, the secure VID comparison module 214 may return an authentication success notification to the BuSAM 222. Further, the BuSAM 222 may increment the count of the microservice count for the corresponding VCode in the VCode-uS count table using the VCode received in the metadata.

If the BuSAM 222 receives the authentication failure notification, the BuSAM 222 may send the authentication failure notification to the install manager 220. The install manager 220 may log an event of failure. Further, the install manager 220 may block the deployment of the microservice.

The BuSAM 222 may then use the authentication client module 226 to validate the authentication identity received in the metadata from the install manager 220. The BuSAM 222 may send a request for validation of the authentication identity to the authentication client module 226. Further, the authentication client module 226 may send the authentication identity to the authentication server module 244 for validation. The Authentication Client Module and the Authentication Server Module may perform the authentication identity validation through an authentication technique such as OAuth. Further, the authentication client module 226 may send the result of authentication (i.e., authentication failure or authentication successful), to the BuSAM 222. It should be noted that authentication identity-based authentication may be executed through means of an authentication token, a certificate, or a digital signature.

If the authentication identity is successfully validated, the BuSAM 222 may notify the authentication success to the install manager 220. Further, the install manager 220 may initiate the deployment of the microservice. If the authentication identity is unsuccessfully validated, the BuSAM 222 may notify the authentication failure to the install manager 220. Further, the install manager 220 may block the deployment of the microservice. Further, the install manager 220 may log successful deployment or unsuccessful deployment.

For subsequent microservices from a vendor with at least one microservice previously authenticated (i.e., when the microservice count for the VCode is non-zero), the BuSAM 222 may avoid the authentication identity validation after the first microservice is authenticated based on a predefined configuration. This is to save processing bandwidth, to avoid delays in microservice deployment, and to minimize network traffic.

Thus, for subsequent microservices for which, based on the predefined configuration, the BuSAM 222 initiates only VID-based authentication, the BuSAM 222 may invoke the secure VID comparison module 214 of the computing device 204. The BuSAM 222 may send the encrypted VID to the secure VID comparison module 214.The secure VID comparison module 214 may decrypt the encrypted VID to obtain the VID. The VID may be used for checking validity of vendor using the VID-based authentication. The secure VID comparison module 214 may read each of the VIDs registered by the product administrator 254 (stored in the secure product storage 244). Further, the secure VID comparison module 214 may compare the VID against each of the registered VIDs.

If the comparison is successful, the secure VID comparison module 214 may return authentication success to the BuSAM 224. If the comparison is unsuccessful, the secure VID comparison module 214 may return authentication failure to the BuSAM 224. If the BuSAM 222 receives authentication success, the BuSAM 222 may allow the install manager 220 to initiate the deployment of the microservice in the computing device 204.

If the BuSAM 222 receives authentication failure, the BuSAM 222 may not allow the install manager 220 to deploy the microservice. The install manager 220 may block the deployment of the microservice in the computing device 204. The install manager 220 may log successful deployment or unsuccessful deployment of the microservice.

In some embodiments, the product administrator 254 may configure the computing device 204 to perform authentication identity validation at regular intervals (i.e., after authentication of every predefined number of microservices of the vendor). In some embodiments, the authentication identity validation may be based on predefined labels assigned to the microservices. The predefined labels may be indicative of one of microservice category or microservice resource criticality. In some embodiments, predefined labels may be assigned to vendors (i.e., VCodes) and the product administrator 254 may configure the computing device 204 to perform authentication identity validation of microservices provided by one or more groups of vendors based on the assigned labels. Alternatively, all the microservices provided by the vendor may be authenticated using both authentication steps (i.e., the VID-based authentication and the authentication identity validation).

Thus, authentication steps for a microservice may be based on the predefined configuration. The pre-defined configuration may be provided through a configuration file or some other means, by the product administrator 254 to the server 206 and the computing device 204 during registration of VIDs. As described earlier, generation and registration of VIDs may be performed multiple times (when needed). Similarly, the pre-defined configuration (via the configuration file) may also be registered by the product administrator 254 in the computing device 204 repeatedly when needed. The predefined configuration may be stored in a storage space of the computing device 204 (for example the secure product storage 216).

In an embodiment, the metadata of a microservice may include the predefined label assigned to the microservice. The BuSAM 222 may check the predefined label and may determine whether the authentication identity validation may be executed or skipped. The predefined label may be indicative of the microservice category. For example, finance microservices that access critical/confidential data may require both authentication steps. In this case, the metadata may also include a microservice category field. The pre-defined configuration may include mapping between the microservice categories and the respective authentication steps to be performed. The predefined label may be indicative of the microservice resource criticality. For example, microservices that have access to critical resources (computational and data) may require authentication with both the authentication steps. In this case, the metadata may also include a microservice resource criticality field. The pre-defined configuration may include mapping between the microservice resource criticality and the authentication steps to be performed.

To improve security, the BuSAM 222 may optionally decide to perform the authentication identity validation at configurable intervals. The product administrator 254 may may configure the interval through the vendor registration application 252 and the server 206. In an alternate embodiment, the BuSAM 222 may be configured to do both the authentication identity validation and the VID-based validation for all microservices without optimizing.

As will be also appreciated, the above described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

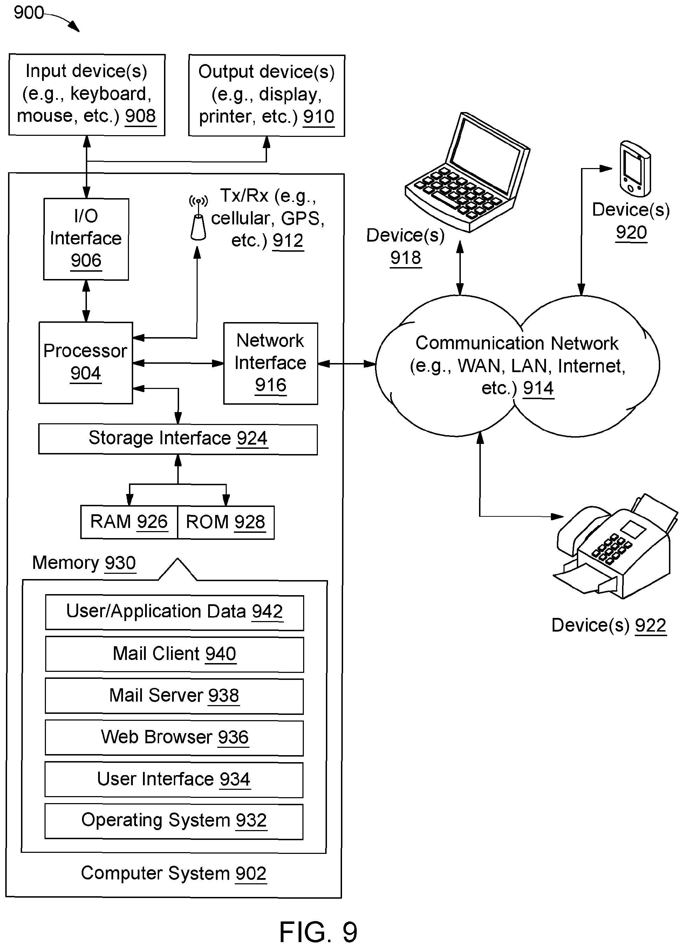

The disclosed methods and systems may be implemented on a conventional or a general-purpose computer system, such as a personal computer (PC) or server computer. Referring now to FIG. 9, a block diagram of an exemplary computer system 902 for implementing embodiments consistent with the present disclosure is illustrated. Variations of computer system 902 may be used for implementing system 100 for authentication before deployment of microservices. The computer system 902 may include a central processing unit ("CPU" or "processor") 904. The processor 904 may include at least one data processor for executing program components for executing user-generated or system-generated requests. A user may include a person, a person using a device such as such as those included in this disclosure, or such a device itself. The processor 904 may include specialized processing units such as integrated system (bus) controllers, memory management control units, floating point units, graphics processing units, digital signal processing units, etc. The processor 904 may include a microprocessor, such as AMD^{®} ATHLON^{®}, DURON^{®} OR OPTERON^{®}, ARM's application, embedded or secure processors, IBM^{®} POWERPC^{®}, INTEL^{®} CORE^{®} processor, ITANIUM^{®} processor, XEON^{®} processor, CELERON^{®} processor or other line of processors, etc. The processor 904 may be implemented using mainframe, distributed processor, multicore, parallel, grid, or other architectures. Some embodiments may utilize embedded technologies like application-specific integrated circuits (ASICs), digital signal processors (DSPs), Field Programmable Gate Arrays (FPGAs), etc.

The processor 904 may be disposed in communication with one or more input/output (I/O) devices via I/O interface 906. The I/O interface 906 may employ communication protocols/methods such as, without limitation, audio, analog, digital, monoaural, RCA, stereo, IEEE-1394, near field communication (NFC), FireWire, Camera Link^{®}, GigE, serial bus, universal serial bus (USB), infrared, PS/2, BNC, coaxial, component, composite, digital visual interface (DVI), high-definition multimedia interface (HDMI), radio frequency (RF) antennas, S-Video, video graphics array (VGA), IEEE 802.n /b/g/n/x, Bluetooth, cellular (e.g., code-division multiple access (CDMA), high-speed packet access (HSPA+), global system for mobile communications (GSM), long-term evolution (LTE), WiMAX, or the like), etc.

Using the I/O interface 906, the computer system 902 may communicate with one or more I/O devices. For example, the input device 908 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, altimeter, gyroscope, proximity sensor, or the like), stylus, scanner, storage device, transceiver, video device/source, visors, etc. Output device 910 may be a printer, fax machine, video display (e.g., cathode ray tube (CRT), liquid crystal display (LCD), light-emitting diode (LED), plasma, or the like), audio speaker, etc. In some embodiments, a transceiver 1612 may be disposed in connection with the processor 904. The transceiver may facilitate various types of wireless transmission or reception. For example, the transceiver may include an antenna operatively connected to a transceiver chip (e.g., TEXAS INSTRUMENTS^{®} WILINK WL1286^{®}, BROADCOM^{®} BCM4550IUB8^{®}, INFINEON TECHNOLOGIES^{®} X-GOLD 1436-PMB9800^{®} transceiver, or the like), providing IEEE 802.11a/b/g/n, Bluetooth, FM, global positioning system (GPS), 2G/3G HSDPA/HSUPA communications, etc.

In some embodiments, the processor 904 may be disposed in communication with a communication network 916 via a network interface 914. The network interface 914 may communicate with the communication network 916. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 916 may include, without limitation, a direct interconnection, local area network (LAN), wide area network (WAN), wireless network (e.g., using Wireless Application Protocol), the Internet, etc. Using the network interface 914 and the communication network 916, the computer system 902 may communicate with devices 918, 920, and 922. These devices may include, without limitation, personal computer(s), server(s), fax machines, printers, scanners, various mobile devices such as cellular telephones, smartphones (e.g., APPLE^{®} IPHONE^{®}, BLACKBERRY^{®} smartphone, ANDROID^{®} based phones, etc.), tablet computers, eBook readers (AMAZON^{®} KINDLE^{®}, NOOK^{®} etc.), laptop computers, notebooks, gaming consoles (MICROSOFT^{®} XBOX^{®}, NINTENDO^{®} DS^{®}, SONY^{®} PLAYSTATION^{®}, etc.), or the like. In some embodiments, the computer system 902 may itself embody one or more of these devices.

In some embodiments, the processor 904 may be disposed in communication with one or more memory devices 1630 (e.g., RAM 926, ROM 928, etc.) via a storage interface 924. The storage interface may connect to memory devices 930 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), STD Bus, RS-232, RS-422, RS-485, I2C, SPI, Microwire, 1-Wire, IEEE 1284, Intel^{®} QuickPath Interconnect, InfiniBand, PCIe, etc. The memory drives may further include a drum, magnetic disc drive, magneto-optical drive, optical drive, redundant array of independent discs (RAID), solid-state memory devices, solid-state drives, etc.

The memory devices 930 may store a collection of program or database components, including, without limitation, an operating system 932, user interface application 934, web browser 936, mail server 938, mail client 940, user/application data 942 (e.g., any data variables or data records discussed in this disclosure), etc. The operating system 932 may facilitate resource management and operation of the computer system 902. Examples of operating systems include, without limitation, APPLE^{®} MACINTOSH^{®} OS X, UNIX, Unix-like system distributions (e.g., Berkeley Software Distribution (BSD), FreeBSD, NetBSD, OpenBSD, etc.), Linux distributions (e.g., RED HAT^{®}, UBUNTU^{®}, KUBUNTU^{®}, etc.), IBM^{®} OS/2, MICROSOFT^{®} WINDOWS^{®} (XP^{®}, Vista^{®}/7/8, etc.), APPLE^{®} IOS^{®}, GOOGLE^{®} ANDROID^{®}, BLACKBERRY^{®} OS, or the like. User interface 1634 may facilitate display, execution, interaction, manipulation, or operation of program components through textual or graphical facilities. For example, user interfaces may provide computer interaction interface elements on a display system operatively connected to the computer system 902, such as cursors, icons, check boxes, menus, scrollers, windows, widgets, etc. Graphical user interfaces (GUIs) may be employed, including, without limitation, APPLE^{®} MACINTOSH^{®} operating systems' AQUA^{®} platform, IBM^{®} OS/2^{®}, MICROSOFT^{®} WINDOWS^{®} (e.g., AERO^{®}, METRO^{®}, etc.), UNIX X-WINDOWS, web interface libraries (e.g., ACTIVEX^{®}, JAVA^{®}, JAVASCRIPT^{®}, AJAX^{®}, HTML, ADOBE^{®} FLASH^{®}, etc.), or the like.

In some embodiments, the computer system 902 may implement a web browser 936 stored program component. The web browser may be a hypertext viewing application, such as MICROSOFT^{®} INTERNET EXPLORER^{®}, GOOGLE^{®} CHROME^{®}, MOZILLA^{®} FIREFOX^{®}, APPLE^{®} SAFARI^{®}, etc. Secure web browsing may be provided using HTTPS (secure hypertext transport protocol), secure sockets layer (SSL), Transport Layer Security (TLS), etc. Web browsers may utilize facilities such as AJAX^{®}, DHTML, ADOBE^{®} FLASH^{®}, JAVASCRIPT^{®}, JAVA^{®}, application programming interfaces (APIs), etc. In some embodiments, the computer system 902 may implement a mail server 938 stored program component. The mail server may be an Internet mail server such as MICROSOFT^{®} EXCHANGE^{®}, or the like. The mail server may utilize facilities such as ASP, ActiveX, ANSI C++/C#, MICROSOFT .NET^{®} CGI scripts, JAVA^{®}, JAVASCRIPT^{®}, PERL^{®}, PHP^{®}, PYTHON^{®}, WebObjects, etc. The mail server may utilize communication protocols such as internet message access protocol (IMAP), messaging application programming interface (MAPI), MICROSOFT^{®} EXCHANGE^{®}, post office protocol (POP), simple mail transfer protocol (SMTP), or the like. In some embodiments, the computer system 902 may implement a mail client 940 stored program component. The mail client may be a mail viewing application, such as APPLE MAIL^{®}, MICROSOFT ENTOURAGE^{®}, MICROSOFT OUTLOOK^{®}, MOZILLA THUNDERBIRD^{®}, etc.

In some embodiments, computer system 902 may store user/application data 942, such as the data, variables, records, etc. (e.g., the set of predictive models, the plurality of clusters, set of parameters (batch size, number of epochs, learning rate, momentum, etc.), accuracy scores, competitiveness scores, ranks, associated categories, rewards, threshold scores, threshold time, and so forth) as described in this disclosure. Such databases may be implemented as fault-tolerant, relational, scalable, secure databases such as ORACLE^{®} OR SYBASE^{®}. Alternatively, such databases may be implemented using standardized data structures, such as an array, hash, linked list, struct, structured text file (e.g., XML), table, or as object-oriented databases (e.g., using OBJECTSTORE^{®}, POET^{®}, ZOPE^{®}, etc.). Such databases may be consolidated or distributed, sometimes among the various computer systems discussed above in this disclosure. It is to be understood that the structure and operation of the any computer or database component may be combined, consolidated, or distributed in any working combination.

Various embodiments provide method and system for authentication before deployment of microservices. For a first microservice of one or more microservices provided by a vendor, the disclosed method and system may receive a microservice package corresponding to the first microservice from a server. The microservice package may include metadata of the first microservice. The metadata may include an encrypted VID corresponding to the first microservice, and an authentication identity. Further, upon receiving the microservice package, the disclosed method and system may decrypt the encrypted VID using a VID encryption key to obtain the VID. The VID encryption key is pre-stored in the computing device and the server. Further, the method and system may authenticate the first microservice by comparing the VID with each of a predefined list of VIDs. Further, based on a successful authentication, the disclosed method and system may validate the authentication identity based on an authentication technique. For each of subsequent microservices from the one or more microservices, the authentication identity validation is, one of, skipped or executed based on a predefined configuration. Further, the disclosed method and system may manage deployment of the first microservice of the one or more microservices in a product.

Thus, the disclosed method and system try to overcome the technical problem of authentication of microservices. The method and system may provide authentication before deployment of the microservices in a product. The method and system may reduce the delay in deployment of microservices. The method and system may decrease the downtime of a feature when the microservice is needed for a user scenario or any other software components. The method and system may reduce overall processing and network resources. Additionally, the method and system may provide a secure method for generation of a metadata used for the authentication.

In light of the above mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Although the present invention has been described in connection with some embodiments, it is not intended to be limited to the specific form set forth herein. Rather, the scope of the present invention is limited only by the claims. Additionally, although a feature may appear to be described in connection with particular embodiments, one skilled in the art would recognize that various features of the described embodiments may be combined in accordance with the invention.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method of authentication before deployment of microservices, the method comprising:
for a first microservice of one or more microservices provided by a vendor,
receiving, by a computing device, a microservice package corresponding to the first microservice from a server, wherein the microservice package comprises metadata of the first microservice, and wherein the metadata comprises an encrypted Vendor ID, VID, corresponding to the first microservice and an authentication identity;
upon receiving the microservice package, decrypting, by the computing device, the encrypted VID using a VID encryption key to obtain the VID, wherein the VID encryption key is pre-stored in the computing device and the server;
authenticating, by the computing device, the first microservice by comparing the VID with each VID of a predefined list comprising a plurality of VIDs;
if authentication of the first microservice is successful, validating, by the computing device, the authentication identity based on an authentication technique, wherein, for each subsequent microservice of the one or more microservices, the authentication identity validation is one of skipped or executed based on a predefined configuration; and
based on authentication of the first microservice, managing, by the computing device, deployment of the first microservice of the one or more microservices in a product.

2. The method of claim 1, wherein the predefined list of VIDs is based on vendor information and a count of the one or more microservices provided by the vendor, and wherein the predefined list of VIDs comprises the one or more VIDs corresponding to the vendor information.

3. The method of any preceding claim, further comprising:
receiving, by the computing device, a list of encrypted VIDs from the server over a secure communication channel, wherein the list of encrypted VIDs comprises each VID comprised by the predefined list of VIDs encrypted using a registration key, wherein the registration key is pre-stored in the computing device and the server;
decrypting, by the computing device, each VID comprised by the list of encrypted VIDs using the secure registration key to obtain the predefined list of VIDs; and
storing, by the computing device, the predefined list of VIDs in a first secure database.

4. The method of any of claims 1-3, wherein the metadata further comprises a predefined label, wherein the predefined label is indicative of one of a microservice category or a microservice resource criticality.

5. The method of claim 4, further comprising:
receiving, by the computing device, a configuration file from an administrator device, wherein the configuration file comprises the predefined configuration, wherein the predefined configuration comprises a predefined criteria corresponding to the execution of authentication identity validation based on the predefined label; and
for each of the subsequent microservices, one of:
validating, by the computing device, the authentication identity using the authentication technique based on the predefined configuration and the predefined label; or
skipping, by the computing device, validation of the authentication identity using the authentication technique based on the predefined configuration and the predefined label.

6. The method of any of claims 1-5, further comprising transmitting, by the computing device, a download request corresponding to the first microservice to the server, wherein the download request comprises a microservice Identifier (uS-ID) of the first microservice.

7. The method of any of claims 1-6, wherein the encrypted VID comprises a randomly selected VID from the one or more VIDs, wherein the randomly selected VID is absent in a list of previously selected VIDs prior to encryption, and wherein the encrypted VID is obtained via encryption of the randomly selected VID using the VID encryption key.

8. The method of any of claims 1-7, wherein managing the deployment of the first microservice comprises, one of:
initiating, by the computing device, the deployment of the first microservice when an identical VID corresponding to the VID is present in the predefined list of VIDs; or
blocking, by the computing device, the deployment of the first microservice when an identical VID corresponding to the VID is absent in the predefined list of VIDs.

9. A system for authentication before deployment of microservices, the system comprising:
a processor; and
a memory communicatively coupled to the processor, wherein the memory stores processor executable instructions, which, on execution, causes the processor to perform the method according to any of claims 1-8.

10. A non-transitory computer-readable medium storing computer-executable instructions for authentication before deployment of microservices, the computer-executable instructions configured for causing a processor to perform the method according to any of claims 1-8.
